# EUROPEAN PATENT APPLICATION

(11) **EP 2 866 155 A1**
(43) Date of publication of application: **29.04.2015**
(21) Application number: 13005093.3
(22) Date of filing: 25.10.2013
(51) Int. Cl.: G06F 17/30, G06Q 10/00, G06Q 10/06

(54) **Data reporting, management and privacy control system**

(71) Applicant: GFK Holding Inc., New York, New York 10011 (US)
(72) Inventor: Lemm, Matthias, DE - 91077 Dormitz (DE); Fischer-Wünschel, Bernhard, DE - 91629 Weihenzell (DE); Fiedler, Marc, DE - 90480 Nürnberg (DE); Sauter, Michael, DE - 89331 Burgau (DE); Kirsche, Thomas, DE - 90556 Cadolzburg (DE)
(74) Representative: FDST Patentanwälte

(57) **Abstract**

The invention relates to a data reporting, management and privacy control system (1) that comprises a data base (2), a classification module (5) for classifying the attributes and measures into a plurality of sensitivity classes and for adding handling rules as meta-data in a database (3) of classification data and handling rules, a data processing module (6) for analyzing the handling rules and adding the privacy parameters in the data cube and a data reporting module (7) for building reports by analyzing the classification data and privacy parameters and for identifying specific handling rules. The disclosed system (1) allows retaining data source anonymity while retaining the complete data volume at the most detailed aggregate level that still protects the data source. Data is rather aggregated than omitted and hence, all aggregates keep their meaning on the respective aggregate level. The differentiation of handing modes for segmenting attributes and measures and for describing attributes and measures gives maximum flexibility in defining the required degree of suppression of crticital information by keeping the maximum degree of completeness of the reports.

## Description

The invention relates to a data reporting, management and privacy control system. In particular, the invention relates to a data warehousing system including the data reporting, management and privacy control system.

Statistical databases in particular and data warehouses in general are used to view and analyze large amounts of business data or any other statistical data, for example for traffic, health or population statistics, in pre-defined as well as ad-hoc reports. Providers of statistical databases must ensure that individual sensitive data, e.g., personal data, medical data, or business-critical data, are not revealed to unprivileged users while making use of these data in statistical aggregates. Business rules must be defined and enforced to prevent disclosure. The unsupervised nature of ad-hoc reports, defined by the user and unknown to the database provider upfront, adds to the complexity of keeping data secure. Storing sensitive data in statistical databases demands automated methods to prevent direct or indirect disclosure of such sensitive data.

The herein described invention is related to methods to protect sensitive data by means of privacy parameters, in particular by means of data handling rules, for exclusive dimensional elements. The invention further provides a classification of attributes and measures and proposes basic handlings for entities that may or may not disclose sensitive data. Based on the classification and using the proposed handlings, a set of rules is described in this document that allows that no sensitive data is revealed in any pre-defined or ad-hoc report.

A data warehouse that contains sensitive data in one or more of its dimensions must protect this sensitive data from being revealed in reports. For example, if the data warehouse tracks customer behavior, no report must show individual customers. The sensitive data must never be shown in any report directly and it must not be deductible from unique attribute combinations (exclusion principle; comparable to unique answers in questionnaire handling). The exclusivity handling methods described herein allows that exclusive data in reports are automatically modified into report elements such that no sensitive data is revealed. At the same time, the reports retain the highest possible amount of detail and hence the highest possible relevance for analysis. The exclusivity handling methods described herein are minimally invasive and are designed to not suppress entities entirely from reports. Rather, critical entities are shifted to reporting elements on an aggregation level that is high enough to protect the data but low enough to keep the data as meaningful as possible. By shifting rather than suppressing data, the depicted segment volume (sub totals) are kept.

To address the above requirements according to the invention a data reporting, management and privacy control system is disclosed, the system comprising a database, the database containing data stored in a data cube, the data cube comprising in a plurality of dimensions a plurality of cube cells, the dimensions comprising an ordered set of attributes and the cube cells comprising facts, and containing stored privacy parameters related at least to a subset of the stored data; a data classification module for classifying the attributes and/or measures calculated from the facts of the data cube into a plurality of sensitivity classes and for adding handling rules as meta-data in a database of classification data and handling rules; a data processing module for analyzing the stored handling rules and the data stored in the data cube and for adding the privacy parameters as meta-data in the at least one database; and a data reporting module for compiling and/or building data reports on request from a subset of data stored in the data cube, for analyzing the classification data and measures with support from the added privacy parameters and for identifying and/or calculating handling rules related to the classification data and measures, the requested report being compiled and/or built according to the handling rules stored in the database of classification data and handling rules.

The disclosed system allows retaining data source anonymity while retaining the complete data volume at the most detailed aggregate level that still protects the data source. Data is rather aggregated than suppressed and hence, all aggregates keep their meaning on the respective aggregate level. Although the invention works on one shared data cube, the consumers of the data cube might see more or less aggregates, depending on the individual data security needs. For example, a data provider using the statistical database is allowed to see only its own data in the original form while data from all other data providers are protected. The invention is suitable for ad hoc reports in which the report structure is defined only by the data consumer and thus a report cannot be used for applying data security. The invention can be built entirely in a statistical database reporting engine and does not take advantage of special report set-ups to protect data. Hence, there is no knowledge required for the report author or ad hoc report builder to apply the invention. This also ensures that there is a single point of "data protection truth". The invention extends a basic data-warehouse data model to contain hidden paths, protected cubes, and exclusive sub cubes.

The invention is based on the assumption that classifications of attributes and measures reflect their potential to reveal sensitive data. The identified and/or calculated handling rules will efficiently and automatically handle exclusivity in statistical databases such that no sensitive data is revealed. The handling rules are based on identified basic handling methods, like aggregating records or renaming attributes. The implemented handling rules extend the characteristic of the statistical data. The disclosed system provides means to control data security on the least granular level, the fact records. That is, data is only disclosed within the exact perimeter given by the data provider. The invention provides an effective method to ensure that identical attributes with different handling rules are shown at the finest granular level. The disclosed system is able to insert additional aggregates at the most detailed level protecting data sources. These additional aggregates are the targets where sensitive data is shifted to.

The facts stored in the cube cells for example are mainly statistical data or basic facts delivered from a data supplying client. A data supplying client can be a specific retailer, which delivers for example the number of sales of a specific product and the related product price. A data supplying client on the other hand can be a hospital delivering as statistical data the number of patients down with a specific disease per time. Measures are calculated from these facts based on the specifically requested report. Measures for example are mathematically derived from the stored facts and display for example a sum, a mean value or a weighted average. Based on the requested report the measures in particular are calculated from facts related to different dimensions.

In statistical databases, a multi-dimensional schema can be implemented in various ways, e.g., as star or snowflake schema when using a relational data store. The exclusivity handling disclosed in this document is independent of the actual implementation.

While the described system is independent from an application area such as market research, the system will be useful in particular for a market research data warehouse. Examples of a market research data warehouse are used to illustrate the concept of the invention. However, these examples shall not restrict the scope of the invention.

In a market research data warehouse, product related sales data are stored and analyzed. Exclusive products are a corner stone of the product assortment strategy of major retailers. Hence, in market research terms, unique answers are very common in the statistical sample. For example, looking at the exclusive sales is a very easy way to identify a retailer which is why exclusive sales must be obfuscated in reports. Different types of exclusive sales have been identified:

A retailer often owns the brand and sells products under this brand label. This retailer is the only one to use this brand, so all products under this trade brand / private label can be considered exclusive sales, in any country, in any period. If the brand is exclusive only in some countries and/or a restricted time period, it is referred to as an exclusive brand. A retailer also often exclusively sells products of a public brand in a certain market segment. Typically, this market segment is a country but it can also be a sales channel. In other countries or channels or at a different time period, other retailers might sell the very same product of the public brand exclusively within their respective sales channel.

In a product related data warehouse, the sensitive data regularly is the retailer of a sales act. Hence, a respective report must not reveal a retailer's identity and market position, that latter given by the retailer's sales performance. The users of a sales related data warehouse are manufacturers and retailers who are familiar with the market and who are assumed to know about trade brands, exclusive brands, and some exclusive models. However, the users generally do not know about rare cases of a given product being sold in a given period and a given market segment only at a single retailer. Coincidental cases of "exclusive" sales are rare at most and do not reveal the position of a retailer in contrast to regular exclusive sales, where a retailer is the only one who is in the position to sell a product.

Inference control in statistical databases is a well-researched topic. A survey for example is given by Domingo-Ferrer, J.: A Survey of Inference Control Methods for Privacy-Preserving Data Mining in: Charu C. Aggarwal and Philip S. Yu: Privacy-Preserving Data Mining - Models and Algorithms, Springer Advances in Database Systems 34 (2008). An inference control method in a data cube is also published in US 2003/0145004 A1. These approaches target at the protection of original entities while showing data aggregate, if the aggregate matches a given inference control criterion. The most common criterion is that the number of (different) entities constituting the aggregates must be above a threshold. Data redaction subsystems are mostly commercial approaches to obscure or to remove information from a data result prior to displaying the result. Data redaction actually removes data. The system described herein does not remove data, and is hence different from any data redaction system. Also, the system according to the invention is different from inference control mechanism because the inference control criterion is based on the structure of the data which formally will be described as hidden paths, protected cubes, and exclusive sub cubes.

According to a preferred embodiment of the invention the data classification module further comprises a knowledge-based database, wherein the attributes and/or measures are related to the sensitivity classes. The classification of the attributes or measures is defined for example by the provider of the system or by an expert in the related field. The knowledge-based database preferably is modified according to a change of related external or real world facts. This allows an up-to-date classification of the attributes and measures depending on the actual market or real world situation with a dynamic classification.

According to another advantageous embodiment the privacy parameters comprise a set of handling rules, each handling rule comprises a subset of privacy parameters specifically related to sensitivity classes. In a product or market related data warehouse this allows an exclusivity handling not only for brands or items but also a more detailed exclusivity handling with regard to item-related or brand-related attributes. As the name implies, an item-related attribute discloses the item, e.g. one specific product, and a brand-related attribute discloses the brand of an item. Preferably, identification flags are stored as privacy parameters, each flag identifies one specific handling rule out of the set of handling rules.

The handling rules preferably comprise at least one directive such as of keeping, renaming or aggregating the attributes and keeping or suppressing the measures of the related sensitivity class. This is the basis for an ad-hoc and effective exclusivity handling, where no data is removed when specific reports are compiled.

According to yet another embodiment of the invention the privacy parameters comprise different handling rules for attributes and measures. This reflects the typically given situation of different hierarchical structures of classifying attributes and measures. Also attributes regularly have a higher potential to reveal entities than measures.

Preferably, the attributes of the data cube dimensions comprise at least one of identifying attributes and classifying attributes. As the name implies, identifying attributes define basic segments of data and classifying attributes describe the respective basic segments. For example, in a product group of mobile phones, an identifying attribute can be the product item such as "Apple I-Phone 5 16GB" or the EAN code and a classifying attribute can be the screen resolution or the operating system of the device.

The attributes of the data cube dimensions are classified by means of the data classification module into at least one sensitivity class of an entity class, an identifier class, a higher-level identifier class, a basic attribute class and a regular attibute class. Attributes that unambiguously identify an entity are called identifiers. Higher-level identifiers are attributes that do not identify the entity itself, but an entity of a functionally dependent identifying attribute, i.e., an entity higher up the dimensional hierarchy. Attributes that identify an entity with some degree of ambiguity are called regular attributes. The combination of multiple regular attributes may unambiguously identify the entity. Basic attributes will never disclose the entity.

The measures furthermore are classified by means of the data classification module into at least one sensitivity class of an entity-related measure class, a basic measure class and a regular measure class. Basic measures can never be used to identify an entity. Entity-related measures may in some cases lead to the identification of the entity. Regular measures are all measures other than basic and entity-related measures. Regular measures have a high potential of revealing an entity.

According to another embodiment of the invention both attributes and measures can be grouped depending on their usage during report calculation in segmenting attributes/measures and describing attributes/measures. Showing the sensitive element inside a segment built by (segmenting) attributes is separated from showing the attributes for a sensitive element (describing).

The differentiation of handling modes by usage during report calculation into segmenting attributes/measures and describing attributes/measures gives maximum flexibility in defining the degree of suppression of critical information and in defining the degree of completeness of the reports.

According to another advantageous embodiment the data reporting module further comprises means for analyzing client related privacy parameters and for identifying and/or calculating client related handling rules. This system is then able to build or compile data reports which are different for different clients or customers. Preferably, the data reporting module further comprises means for identifying the actual user of the system or target client of the reports and for compiling and/or building data reports from a subset of data stored in the data cube according to the client related handling rules stored in the database of classification data and handling rules in case the actual user or target client is identified as a privileged user or client, e.g. a data supplying retailer. If the actual user or target client is such a privileged user or target client its own exclusive entities, attributes or measures may be fully disclosed in its specific reports.

The foregoing and other objects, features and advantages of the present invention will be apparent from the following more particular description of preferred embodiments of the invention, as illustrated in the accompanying drawings.
- Fig. 1: is a schematic drawing of a data reporting, management and privacy control system.
- Fig. 2: shows examples of a data cube.
- Fig. 3: shows in respective block diagrams examples of classifying data and respective attributes.
- Fig. 4: shows in a block diagram an example of a identifying hierarchy of a geographical dimension.
- Fig. 5: shows in a block diagram the concept of hidden paths.
- Fig. 6: shows examples for exclusive sub cubes.
- Fig. 7: shows examples of exclusive sub cubes in protected cubes.
- Fig. 8: shows in a block diagram the concept of renaming critical entities
- Fig. 9: shows in a block diagram the concept of aggregation.
- Fig. 10: shows in block diagrams the concept of aggregation including higher segmenting levels

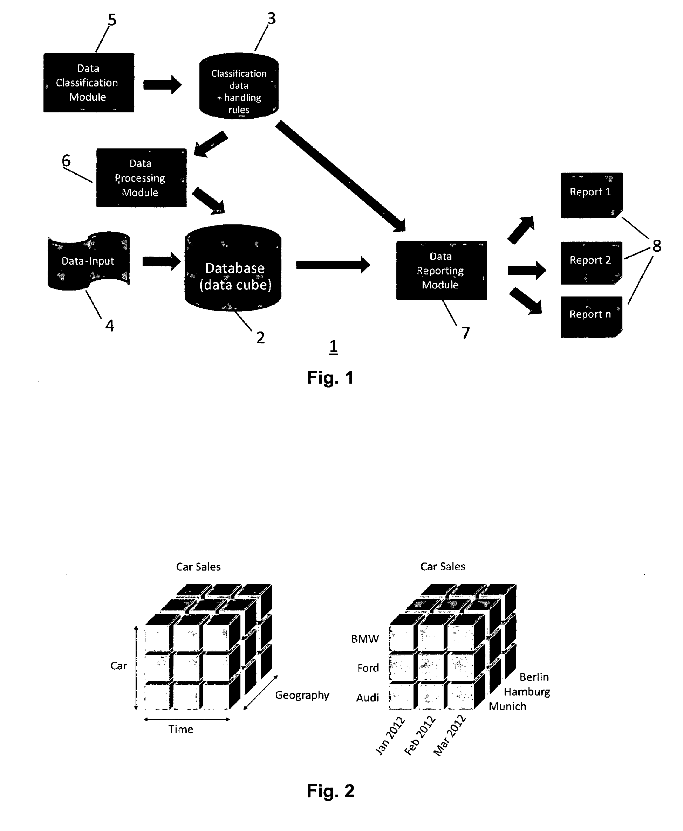

Fig. 1 is a schematic drawing of an exemplary data reporting, management and privacy control system 1. The system 1 comprises a database 2. A data supplying client, which can be a retailer, provides specific sales or other data 4 to the database 2 and provides also his specific handling rules or general requirements for the protection of his exclusive sales to a second database 3 containing the classification data and handling rules. This database 3 flags the static exclusive handling ID's, e.g. keeping, aggregating or renaming the critical element which could be exclusive brands or product items. The warehouse data of the data supplying client as such are delivered to the database 2 via the data input module 4. These data are stored in the database 2 as an n-dimensional data cube.

A data classification module 5 classifies the attributes and measures of the n-dimensional data cube into a plurality of sensitivity classes and adds the handling rules for the critical elements in the database containing the classification data and handling rules 3.

A data processing module 6 analyzes the handling rules stored in the second database 3 and the data stored in a data cube within the database 2 and adds the respective privacy parameters as meta-data in the database 2.

To get a specific report 8, a data reporting module 7 analyzes the added privacy parameters and identifies and/or calculates the respective handling rules related to the attributes and measures as requested by the specific report. The specific report then is compiled or built according to the calculated or identified handling rules. The data reporting module 7 also considers the user or target client related handling rules stored in the second database 3.

Data warehouses are modeled according to a multi-dimensional data model within the multi-dimensional data model, a schema consists of a set of dimensional hierarchies (D¹, ..., Dⁿ) and a set of facts (F¹, ..., F^{m}). Measures (M¹, ..., M^{m}) are derived based on facts of the cube. Using the identity function as calculation rule, each fact can itself be a measure Dimensions are qualifying properties, whereas facts and measures are quantifying properties of the data warehouse. Multi-dimensional data are often illustrated as cubes with the dimensions along the edges and the facts (or measures) in the cube cells. An example of a data cube for car sales is shown in Fig. 2. The dimensions are Time, Geography, and the (model of the) car that was sold. As a single fact, cube cells contain the number of cars sold from a given manufacturer in a given month and city. The example is simplified here by only showing a few attributes per dimension but will be used and refined as a running example throughout the document.

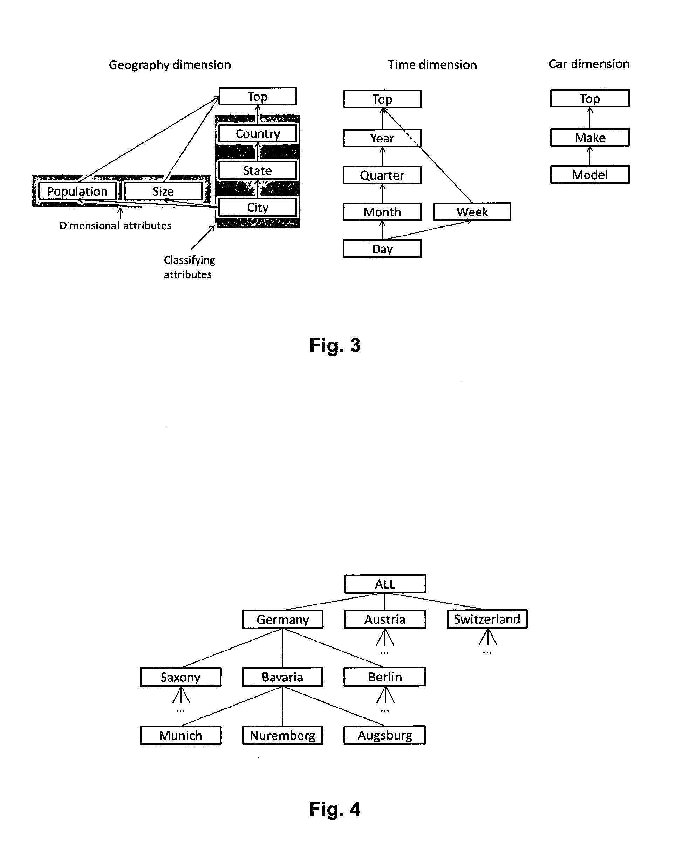

The schema of a dimension D is a partially ordered set of attributes ({A₁, ..., Aₖ, TopD}; →), where → denotes functional dependency and TopD is a generic maximum in the set of attributes. For modeling purposes, attributes can be separated into identifying attributes, which classify entities of the modeled world, and classifying attributes (or simply attributes), which further describe identifying attributes. More details for all dimensions in the example are shown in Fig. 3..

A path P in a dimension is a fully ordered subset of the dimension's schema. In the running example, the Time dimension contains these two paths:
1) P₁ = Day → Month → Quarter → Year → Top,
2) P₂ = Day → Week → Top.

However, by definition, all subsets of both paths are also paths.

Given a path P = A₁ → A₂ → ... → Aₘ → TopD, a classifying hierarchy of the path is a tree with all nodes from all domains of the attributes and the generic node "ALL": dom(A₁) + dom(A₂) + ... + dom(Aₘ) + "ALL" (dom(A) denotes the domain of the attribute A). A path is defined on a dimension's schema (schema-level), whereas a classifying hierarchy contains instances of the attributes (instance-level). A subset of the classifying hierarchy of the Geography dimension is shown in Fig. 4. The complete classifying hierarchy also contains the here missing elements, e.g., all states and cities of Austria and Switzerland as well as all cities in Saxony and Berlin.

Facts in a multi-dimensional schema are quantifying properties of the data warehouse. Each fact has a granularity and a summation type: F=(G, SumType). The granularity G={G₁,..., Gₖ} is a subset of all attributes of all existing dimensions with dimension schemas DS₁, ..., DSₙ such that:
1) For all i (1 ≤ i ≤ k) exists a j (1 ≤ j ≤n): Gᵢ ∈ DSⱼ
2) For all i (1 ≤ i ≤ k) for all j (1 ≤ j ≤ k) i ≠ j: Gᵢ !--> Gⱼ
(Gᵢ !--> Gⱼ denotes that Gⱼ does NOT functionally depend on Gᵢ)

The first requirement states that each attribute of the granularity G can be found in one of the dimensions. The second requirement states that there is no functional dependency between any two attributes of the granularity.

Measures are quantifying features of the data warehouse and derived from facts. Each measure has a granularity G, a calculation rule f() over a non-empty subset of all facts in the multi-dimensional schema, and a summation type: M=(G, f(F₁, ..., Fₖ), SumType). Using the identity function as calculation rule, each fact can itself be a measure. Hence, we will use measure and facts interchangeably in the following definitions without loss of generality.

The schema of a data cube C consists of a set of dimensional schemas DS and a set of measures M:
C = (DS, M) = ({D¹, ..., Dⁿ}, {M¹, ..., M^{m}}).

An instance of the cube C is a subset of the cross-product of the domains of all attributes and measures that contribute to the cube schema, i.e.,
C c dom(DS) x dom(M) = dom(D¹) x ... x dom(Dⁿ) x dom(M¹) x ... x dom(M^{m}).

A cube cell c is an element of the cube:
c = (c¹₁, ..., c¹ₖ₁, c²₁, ..., c²ₖ₂, ... cⁿₖₙ, m₁, ..., mₘ) with c^{j}ᵢ ∈ dom(A^{j}ᵢ) and mᵢ ∈ dom(Mⁱ).

In a simplified notion (though equivalent), a cube cell is a tuple of values of all domains:
c=(c₁, ..., c_{K}, m₁, ... mₘ) with c₁ ∈ dom(A¹₁), ... , c_{K} ∈ dom(Aⁿₖₙ), and mᵢ ∈ dom(Mⁱ).

A report in a statistical database comprises a subset of cube cells that is usually derived from the cube by means of slicing, dicing, splitting, roll-up and drill-down operations. A report is a tabular representation of the selected subset. The subset to show is defined/navigated along the dimensions of the cube. A report usually aggregates and possibly orders/ranks measures. Aggregates are calculated for a combination of attributes and each instance of the attribute combination is called a segment. The addition of an attribute to the report, followed by a re-calculation of the aggregates, may or may not further segment the data. If the new attribute further segments the data, the new segments are referred to as sub segments.

Next, for a better understanding the basic data-warehouse data model is extended to model parts of the data that are sensitive and must be protected from unauthorized access. Furthermore, the concept of exclusivity is formalized. Exclusivity allows the deduction of sensitive data through other, non-sensitive data. That is, a non-sensitive classifying hierarchy may have unique instances of its attributes to deduct the full path to a cube cell, including sensitive parts of the classification hierarchy.

A hidden path of a dimension consists of a distinguished attribute and all attributes that the distinguished attribute functionally depends on. A hidden path must never be revealed to the unprivileged user in a report (authorized users may see the hidden path). Consequently, elements of the classifying hierarchy of a hidden path are never shown directly in a report. An example for a hidden path (i.e., sensitive data) in the running example may be the Make in the Car dimension. Since the Make functionally depends on the Model, the hidden path is the following: Model → Make.

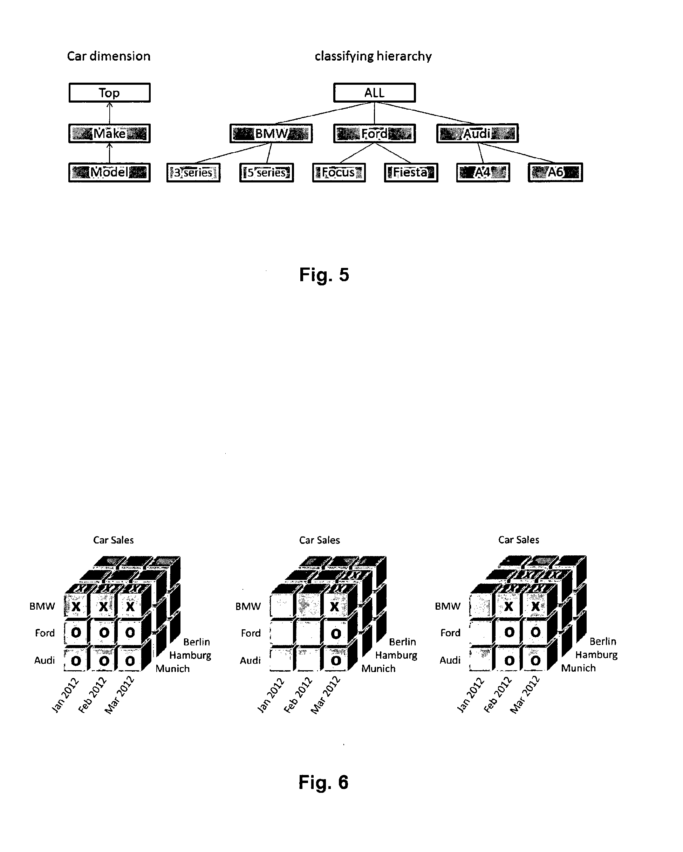

Fig. 5 shows the Car dimension with the hidden path marked. Fig. 5 also contains the classifying hierarchy of the Car dimension with all elements marked that may never be shown in a report. Note that the hidden path is defined on the schema-level, i.e., in the schema of the dimension. Omitting nodes in the classifying hierarchy, i.e., on the instance-level, is an implication of the hidden path definition.

A protected cube is a data cube that omits hidden paths in its schema: PC=(DS',M)=({D^{1'}, ..., D^{n'}}, {M¹, ..., M^{m}}) where Dⁱ contains the hidden path, but D^{i'} does not. Consequently, a protected cube cell is an element of the protected cube. Protected cubes are the basis for all reports in order to protect sensitive data.

However, even though a hidden path is omitted from the protected cube, a protected cube cells may still allow the deduction of the omitted values on instance-level. This is caused by sparsity of the cube, i.e., exclusive cube cells. An exclusive cube cell is a cube cell of the form (c₁,..., cᵢ, ...,c_{K}, m₁, ..., mₘ) with cⱼ (j!=i) arbitrary but fixed and Mₗ being a distinguished measure with mₗ != NULLⁱ such that for all cells in the set {(c₁, ..., cᵢ', ...,c_{K}, m₁,..., mₘ)|cᵢ' ∈ dom(Aᵢ)} holds that either
1) mₗ = NULL or
2) cᵢ' = cᵢ

In other words, there is a 1:1 relationship on instance-level between the values c₁,... ,cᵢ₋₁, cᵢ₊ᵢ,...,c_{K} and the value cᵢ. Or, there is only one (exclusive) cell with the values c₁,...,cᵢ₋₁, cᵢ₊₁,...,c_{K}. Hence, if Aᵢ is in a hidden path, the value of cᵢ of Aᵢ is revealed in the exclusive cube cell through the knowledge of the values c₁, ..., cᵢ₋₁, cᵢ₊₁, ... c_{K} and the knowledge of the exclusivity of the cell. Additional actions must be taken to prevent the hidden path from being compromised in exclusive cube cells.

An exclusive sub cube is the natural extension of an exclusive cube cell. An exclusive sub cube is a set of cube cells of the form {(C₁, ..., Cᵢ₋₁, cᵢ, Cᵢ₊₁, ..., C_{K}, m₁, ..., mₘ)|Cⱼ ⊆ dom(Aⱼ) arbitrary but fixed, mᵢ ∈ dom(Mⁱ)}. Mₗ is a distinguished measure in the sub cube and mₗ !=NULL for all cells. Furthermore, for all cells in the set {(C₁, ..., Cᵢ₋₁, cᵢ',Cᵢ₊₁, ...,C_{K}, M₁,..., Mₘ)|Cᵢ' ∈ dom(Aᵢ) and mᵢ ∈ dom(Mⁱ)} it holds that either
1) mₗ = NULL or
2) cᵢ' = cᵢ

Hence, if Aᵢ is in the hidden path, the value of Aᵢ is revealed in any cell of the exclusive sub cube through the knowledge of the values c₁, ..., cᵢ₋₁, cᵢ₊₁, ... c_{K} and the knowledge of the exclusivity of the sub cube.

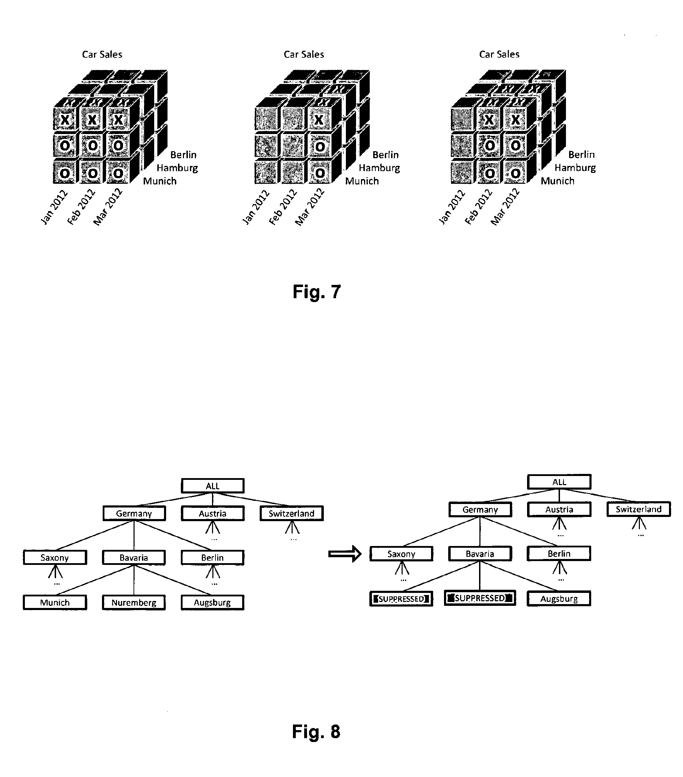

Fig. 6 shows three examples for exclusive sub cubes in the context of the car sales scenario. Fig. 7 shows the corresponding protected cubes with the hidden path (Model → Make in the Car dimension) omitted. A user may view and analyze car sales in different cities over time but must not know how many cars of the individual manufacturers were sold. The left cubes in Fig. 6 and Fig. 7 show a scenario, where BMW is the only manufacturer to sells cars in the city of Munich. Cube cells marked with an "o" are NULL and consequently, cube cells marked with an "x" form an exclusive sub cube. Knowing that BMW sells cars in Munich exclusively reveals the sales numbers even in the protected cube in Fig. 7. The other cubes in Fig. 6 and Fig. 7 show two other possible exclusive sub cubes. The example in the middle contains an exclusive sub cube for cars sold exclusively by BMW in March 2012 in the cities of Hamburg and Munich. The example on the right shows a larger exclusive sub cube for cars sold in February and March 2012 and in the cities of Hamburg and Munich.

Exclusive sub cubes are maximal, i.e., there is no dimension that can be extended by a value such that the resulting set is still an exclusive sub cube. Exclusive sub cubes may overlap. Exclusive sub cubes in the data warehouse can either be determined by inspecting the data or be specified by domain experts.

To effectively protect the hidden path in exclusive sub cubes, it is necessary to treat attributes that identify the sub cube. Details on possible treatments are mentioned above). In the running example (specifically in the left cube in Fig. 6), the city of Munich identifies the protected sub cube. However, any classifying attribute further describing the city of Munich may also identify the city itself. It is mandatory to know and classify the attribute/value combinations that unambiguously identify a real-world object and hence may reveal an exclusive sub cube. This leads to the following definitions:
An instance of a identifying attribute-modeling a real-world object-is called an entity. Instances of classifying attributes further describe an entity and are simply called attributes of the entity. Attributes that unambiguously identify an entity are called identifiers. Higher-level identifiers are attributes that do not identify the entity itself, but an entity of a functionally dependent identifying attribute, i.e., an entity higher up the dimensional hierarchy. Attributes that identify an entity with some degree of ambiguity are called regular attributes. The combination of multiple regular attributes may unambiguously identify the entity. Attributes that are generic and broadly present, hence never identify the entity, are called basic attributes. Whether an attribute is a regular attribute or a basic attribute depends on the entity it describes. Because the same attribute can be a basic attribute in one context but a regular attribute in another, reporting across contexts uses the more restrictive classification.

Like attributes, measures can also be further classified with respect to their potential to identify entities. Basic measures can never be used to identify an entity. Entity-related measures may in some cases lead to the identification of the entity. Regular measures are all measures other than basic and entity-related measures. Regular measures have a high potential of revealing an entity.

The goal of exclusivity handling is to allow users to specify ad-hoc reports of the data in the statistical database and to show the most detailed data while guaranteeing that given hidden paths are not revealed. Hidden paths must not be revealed directly (hence, they cannot be selected for reporting) but they must also not be deducible from other values due to exclusivity. Exclusivity handling assumes a user who is an expert in the domain and knows about some elements of the exclusive sub cubes. Hence, it is not acceptable to show (cells of) exclusive sub cubes without modifications.

To retain entities that contribute to exclusive sub cubes in reports without disclosing the hidden path, these entities and their attributes and measures are handled according to a set of handling options. Handling options for multiple attributes and measures can be bundled to handling rules.

To "hide" individual entities of exclusive sub cubes while keeping the measures in the totals two options are available:
- Rename the entity using a pre-defined name like "Exclusive" or "Suppressed"
- Aggregate the entity with other entities of the same kind using a pre-defined name like "Others",

Fig. 8 shows the classifying hierarchy of the Geography dimension with the cities of Munich and Nuremberg renamed into "SUPPRESSED":

| **Town** | **Region** | **Country** | **no. of car sales** |
|---|---|---|---|
| Augsburg | Bavaria | Germany | 12000 |
| Suppressed | Bavaria | Germany | 20000 |
| Suppressed | Bavaria | Germany | 30000 |

Or

| **Region** | **Town** | **Country** | **no. of car sales** |
|---|---|---|---|
| Bavaria | Total | Germany | 62000 |
| Bavaria | Augsburg | Germany | 12000 |
| Bavaria | Suppressed | Germany | 20000 |
| Bavaria | Suppressed | Germany | 30000 |

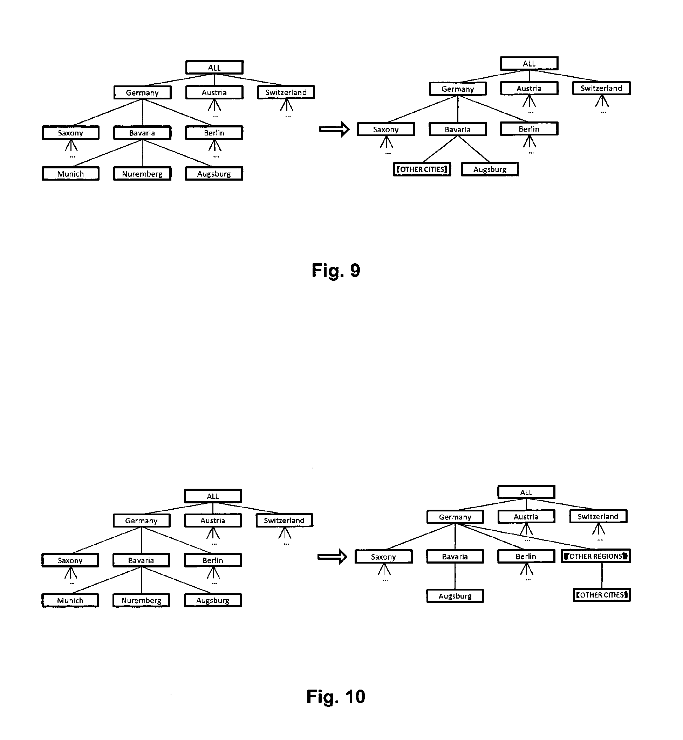

Fig. 9 shows the classifying hierarchy of the Geography dimension with the cities of Munich and Nuremberg aggregated into "OTHERS":

| **Town** | **Region** | **Country** | **no. of car sales** |
|---|---|---|---|
| Augsburg | Bavaria | Germany | 12000 |
| Other cities | Bavaria | Germany | 50000 |

Or

| **Region** | **Town** | **Country** | **no. of car sales** |
|---|---|---|---|
| Bavaria | Total | Germany | 62000 |
| Bavaria | Augsburg | Germany | 12000 |
| Bavaria | Other cities | Germany | 50000. |

Different attribute types can be handled differently in the same report. It is e.g. possible to rename or aggregate the entity and its identifiers and to rename or aggregate basic attributes and regular attributes.

Furthermore, attributes are handled differently depending on whether they define segments in a report or are used to further describe the critical entity in more detail.

For example, in case the critical entities Munich and Nuremberg need to be renamed and the higher level attribute region is to be hidden by aggregation only in case it is used as a further description of the critical entity, then the regions of critical entities are renamed:

| **Town** | **Region** | **Country** | **no. of car sales** |
|---|---|---|---|
| Augsburg | Bavaria | Germany | 12000 |
| Suppressed | Suppressed | Germany | 20000 |
| Suppressed | Suppressed | Germany | 30000 |

In case of attribute region is used to define segments, the regions remain unchanged:

| **Region** | **Town** | **Country** | **no. of car sales** |
|---|---|---|---|
| Bavaria | Total | Germany | 62000 |
| Bavaria | Augsburg | Germany | 12000 |
| Bavaria | Suppressed | Germany | 20000 |
| Bavaria | Suppressed | Germany | 30000 |

But in case the critical entities Munich and Nuremberg need to be aggregated and the higher level attribute region is to be hidden by aggregation also if it is used to define segments, then the set of regions is changed:

| **Region** | **Town** | **Country** | **no. of car sales** |
|---|---|---|---|
| Bavaria | Total | Germany | 12000 |
| Bavaria | Augsburg | Germany | 12000 |
| Other Reg. | Suppressed | Germany | 50000 |

Fig. 10 shows the classifying hierarchy of the Geography dimension with the cities of Munich and Nuremberg aggregated into "OTHERS" and the region of the critical entities to be aggregated.

Since measures can also potentially reveal an entity, they are also handled in the presence of exclusive sub cubes. Possible treatments for measures are "Keep" (no treatment) or "Suppress" (the measure from the report).

Again, different measure types can be handled differently in the same report. It is e.g. possible to keep basic measures and entity-related measures but to suppress regular measures. As attributes the measures can be handled differently depending on whether they define segments in a report or are used to further describe the critical entity in more detail. In most of the cases measures are used to further describe the elements, but price classes or volume quantiles or top rankings are examples of segmenting measures.

Whether it is best to aggregate or otherwise treat an entity and whether the suppression is only required for further descriptions depends on the application at hand. Different stakeholders may contribute to finding appropriate rules.

The main dimensions in an exemplary product or market related data warehouse are a product dimension, an outlet dimension and a time dimension. The product dimension is a multi-level hierarchy of product items (goods that are sold) and brands where brands functionally depend on the items. Identifiers for items and brands are called item-related attributes and brand-related attributes, respectively. The brand is also an example for a higher-level identifier of the item-. Whether an attribute of the entity item is a regular attribute or a basic attribute differs across product groups.

Handling rules are used to bundle handling options of a large number of attributes and measures. Each handling rule subsumes entity handling, attribute handling and measure handling. To implement exclusivity handling during the process of compiling/building a report, each cube cell (fact record) is tagged with the handling rules for each kind of critical dimensions involved.The different handling options are the following (table 1):

**Table 1: Overview of handling options**

| **Entity or identifier handling** | **Attribute handling** | | | **Measure handling** | | |
|---|---|---|---|---|---|---|
| | **Basic attribute handling** | **Regular attribute handling** | **Higher-level identifier handling** | **Basic measure handling** | **Entity-related measure handling** | **Regular measure handling** |
| No handling = keep | keep | keep | keep | keep | keep | Keep |
| Rename identifiers | rename | rename | rename | suppress | suppress | Suppress |
| Aggregate identifiers | aggregate | aggregate | aggregate | (suppress In totals) | (suppress In totals) | (suppress In totals) |
| (Suppress Identifiers) | (suppress) | (suppress) | (suppress) | | | |

The handling options shown in brackets in table 1 have the potential to destroy the completeness of the reports. To avoid this, only handling rules that are composed out of the handling option without brackets might be offered (table 2):

**Table 2: Overview of a (incomplete) selection of sensible handling rules, all not destroying report completeness**

| **No. of handling rule** | **Entity or identifier handling** | **Attribute handling** | | | **Measure handling** | | |
|---|---|---|---|---|---|---|---|
| | | **Basic attribute handling** | **Regular attribute handling** | **Higher-level identifier handling** | **Basic measure handling** | **Entity-related measure handling** | **Regular measure handling** |
| 1 | No handling = keep | keep | keep | keep | keep | keep | keep |
| 2 | Rename identifiers | keep | keep | keep | keep | keep | keep |
| 3 | Rename identifiers | keep | keep | rename | keep | keep | suppress |
| 4 | Rename identifiers | keep | rename | rename | keep | suppress | suppress |
| 5 | Rename identifiers | rename | rename | rename | keep | suppress | suppress |
| 6 | Aggregate identifiers | aggregate | aggregate | aggregate | keep | keep | suppress |
| 7 | Aggregate identifiers | aggregate | aggregate | aggregate | keep | suppress | suppress |

The differentiation of handing modes by usage during report calculation into segmenting attributes/measures and describing attributes/measures increases the set of handling options.

A measure is usually describing, i.e. since it is based on the definition of the cube cell it is based on the selection of the entities. Examples of segmenting measures are price classes or volume quantiles or top rankings.

Table 3 gives an overview of handling options including dependencies of usage of attributes and measures during report calculation.

Again the handling options shown in brackets in table 3 have the potential to destroy the completeness of the reports. In case it is required to avoid this, only handling rules that are composed out of the handling option without brackets might be offered.

The number of sensible handling rules that can be build in combining these handling options is huge. They reach from 1 (= no handling) across i (= suppress the critical elements and all connected attributes and measures, but only for further describing attributes and measures) up to n (= suppress the critical elements and all connected attributes and suppress the measures also in the totals)

Table 4 gives an overview of a (incomplete) selection of sensible handling rules with differentiation of usage of attributes and measures into segmenting and describing.

**Table 3: Overview of handling options including dependencies of usage of attributes and measures during report calculation**

| *Entity or identifier Handling* | *Attribute handling* | | | | | | *Measure handling* | | | | | |
|---|---|---|---|---|---|---|---|---|---|---|---|---|
| | *Basic attribute handling* | | *Regular attribute handling* | | *Higher-level identifier handling* | | *Basic measure handling* | | *Entity-related measure handling* | | *Regular measure handling* | |
| | *segmenting* | *describing* | *segmenting* | *describing* | *segmenting* | *describing* | *segmenting* | *describing* | *segmenting* | *describing* | *segmenting* | *describin g* |
| *No handling* = *keep* | *keep* | *keep* | *keep* | *keep* | *keep* | *keep* | *keep* | *keep* | *keep* | *keep* | *keep* | *keep* |
| *Rename identifiers* | *(rename)* | *rename* | *(rename)* | *rename* | *(rename)* | rename | *suppress* | suppress | *suppress* | suppress | *suppress* | suppress |
| *Aggregate identifiers* | *(aggregate)* | *aggregate* | *(aggregate)* | *aggregate* | *(aggregate)* | *aggregate* | *(suppress in totals)* | *(suppress in totals)* | *(suppress in totals)* | *(suppress in totals)* | *(suppress in totals)* | *(suppress in totals)* |
| *(Suppress Identifiers)* | *(suppress)* | *(suppress)* | *(suppress)* | *(suppress)* | *(suppress)* | *(suppress)* | | | | | | |

**Table 4: Overview of a (incomplete) selection of sensible handling rules with differentiation of usage of attributes and measures into segmenting and describing**

| No | Entity or identifier handling | Attribute handling | | | | | | Measure handling | | | | | |
|---|---|---|---|---|---|---|---|---|---|---|---|---|---|
| | | Basic attribute handling | | Regular attribute handling | | Higher-level identifier handling | | Basic measure handling | | Entity-related measure handling | | Regular measure handling | |
| | | segment. | describ. | segment. | describ. | segment. | describ. | segment. | describ. | segment. | describ. | segment. | describ. |
| 1 | No handling = keep | keep | keep | keep | keep | keep | keep | keep | keep | keep | keep | keep | keep |
| 2 | Rename | keep | keep | keep | rename | keep | rename | keep | keep | keep | keep | keep | suppress |
| 3 | Rename | keep | keep | keep | rename | keep | rename | keep | keep | keep | suppress | keep | suppress |
| 4 | Rename | keep | rename | keep | rename | keep | rename | suppress | keep | keep | suppress | keep | suppress |
| 5 | Aggregate | keep | keep | keep | keep | keep | aggreg. | keep | keep | keep | keep | keep | suppress |
| 6 | Aggregate | keep | keep | keep | aggreg. | keep | aggreg. | keep | keep | keep | suppress | keep | suppress |
| 7 | Aggregate | keep | aggreg. | keep | aggreg. | keep | aggreg. | keep | keep | keep | keep | keep | suppress |
| .. | | | | | | | | | | | | | |
| i | Aggregate | keep | aggreg. | keep | aggreg. | keep | aggreg. | keep | suppress | keep | suppress | keep | suppress |
| .. | | | | | | | | | | | | | |
| i | Aggregate | keep | keep | aggreg. | aggreg. | aggreg. | aggreg. | keep | keep | suppress | suppress | suppress | suppress |
| .. | | | | | | | | | | | | | |
| n | (Suppress Identifiers) | (suppress) | (suppress) | (suppress) | (suppress) | (suppress) | (suppress) | *(suppress in totals)* | *(suppress in totals)* | *(suppress in totals)* | *(suppress in totals)* | *(suppress in totals)* | *(suppress in totals)* |

The invention will be further described using some examples on how the different handling rules control the results of the report calculation.

All examples will be based on the following data of the product group Panel TV in a specific period and country. For ease there are only 20 product items of 8 different brands.

| Product Item | Brand | Screen Size | Technolog y | Sales Units | Price in EUR | Selling Shops |
|---|---|---|---|---|---|---|
| UE32F4000 | SAMSUNG | 32 | LED | 529 | 261 | 113 |
| PS51F5570 | SAMSUNG | 51 | PLASMA | 370 | 687 | 35 |
| UE40F6470 | SAMSUNG | 40 | LED | 360 | 699 | 288 |
| 26PFL4007K | PHILIPS | 26 | LCD | 356 | 299 | 157 |
| 32PFL3208K | BLAUPUNKT | 32 | LCD | 344 | 357 | 134 |
| UE32F5000 | SAMSUNG | 32 | LCD | 343 | 335 | 32 |
| 32LS345S | LG | 32 | PLASMA | 328 | 305 | 361 |
| XLE 328 W-D4 | OKAY | 32 | LED | 301 | 306 | 18 |
| KDL-40R470 | SONY | 40 | LED | 269 | 471 | 346 |
| LED 32.3 T/C | SCHNEIDER | 32 | LCD | 261 | 269 | 6 |
| XLE 328 B-D4S | OKAY | 32 | LCD | 244 | 328 | 18 |
| KDL-32W655 | SONY | 32 | LCD | 225 | 466 | 247 |
| UE46F6170 | SAMSUNG | 46 | LED | 219 | 585 | 34 |
| OLE 244-B-D4 | OKAY | 23.6 | LED | 199 | 225 | 18 |
| BLA-42/188N | BLAUPUNKT | 42 | LED | 119 | 353 | 12 |
| UE40F6500 | PANASONIC | 40 | PLASMA | 115 | 610 | 54 |
| LED29B1000 S | PANASONIC | 28.5 | LED | 111 | 244 | 18 |
| KDL-42W655 | SONY | 42 | LED | 105 | 629 | 227 |
| XLE 228-B D4 DVD | OKAY | 21.5 | LCD | 102 | 219 | 18 |
| LED29A6500 | PANASONIC | 29 | LCD | 100 | 199 | 18 |
| Total | | | | 5000 | 396 | 905 |

Product Item and Brand are classified to be the identifying dimensions which contain the following critical elements:
OKAY = Exclusive Brand of Retailer 1
PANASONIC LED29B1000S = Exclusive Product of Retailer 1
PANASONIC LED29A6500 = Exclusive Product of Retailer 1
SCHNEIDER = Exclusive Brand of Retailer 2
BLAUPUNKT BLA-42/188N = Exclusive Product of Retailer 3

The classification module was used to classify the attributes and measures in the following way:

| Basic attribute | Regular attribute | Higher-Level-Identifier | Basic measure | Entity related measure | regular measure |
|---|---|---|---|---|---|
| Technology | Screen Size | Brand | Sales Units | Price in EUR | Selling Shops |

Out of the set of possible handling rules, the following were selected:

| *Context* | *No. of handling rule* | *Entity or identifier handling* | *Attribute handling* | | | *Measure handling* | | |
|---|---|---|---|---|---|---|---|---|
| | | | *Basic attribute handling* | *Regular attribute handling* | *Higher-level identifier handling* | *Basic measure handling* | *Entity-related measure handling* | *Regular measure handling* |
| *Exclusive Brand of Retailer 1* | *7* | *Aggregate identifiers* | *aggregate* | *aggregate* | *aggregate* | *keep* | *keep* | *suppress* |
| *Exclusive Brand of Retailer 2* | *7* | *Aggregate identifiers* | *aggregate* | *aggregate* | *aggregate* | *keep* | *keep* | *suppress* |
| *Exclusive Product of Retailer 1* | *2* | *Rename identifiers* | *keep* | *keep* | *Rename* | *keep* | *keep* | *suppress* |
| *Exclusive Product of Retailer 2* | *3* | *Rename identifiers* | *keep* | *rename* | *Rename* | *keep* | *suppress* | *suppress* |
| *Exclusive Product of Retailer 3* | *3* | *Rename identifiers* | *keep* | *rename* | *Rename* | *keep* | *suppress* | *suppress* |

In consequence the exclusive brands are aggregated and the exclusive product items are renamed but shown with different sets of attributes and measures.

Several different report types can be created:

### Report type A: Standard Segmentations

Standard segmentations based on any kind of uncritical attributes are not influenced by the handling rules at all:

| Technology | Screen Size | Sales Units | Price in EUR |
|---|---|---|---|
| LCD | < 32 Inch | 1975 | 325 |
| LED | < 32 Inch | 1140 | 265 |
| | > 32 Inch | 1072 | 573 |
| PLASMA | < 32 Inch | 328 | 305 |
| | > 32 Inch | 485 | 669 |
| Total | | 5000 | 396 |

### Report type B: Market segmentation by brand

The following handling rules need to be applied:

| Context | No. of handling rule | Entity or identifier handling | Attribute handling | | | Measure handling | | |
|---|---|---|---|---|---|---|---|---|
| | | | Basic attribute handling | Regular attribute handling | Higher-level identifier handling | Basic measure handling | Entity-related measure handling | Regular measure handling |
| Exclusive Brand of Retailer 1 | 7 | Aggregate identifiers | aggregate | Aggregate | aggregate | keep | Keep | suppress |
| Exclusive Brand of Retailer 2 | 7 | Aggregate identifiers | aggregate | Aggregate | aggregate | keep | Keep | suppress |

According to these rules the exclusive brands of Retailer 1 and Retailer 2 are aggregated into Other Brands and shown without further details on attributes and without the regular measure "Selling Shops"

| Brand | Technology | Screen Size | Sales Units | Price in EUR | Selling Shops |
|---|---|---|---|---|---|
| BLAUPUNKT | LCD | < 32 Inch | 344 | 357 | 134 |
| | LED | > 32 Inch | 119 | 353 | 12 |
| LG | PLASMA | < 32 Inch | 328 | 305 | 361 |
| PANASONIC | LCD | < 32 Inch | 100 | 199 | 18 |
| | LED | < 32 Inch | 111 | 244 | 18 |
| | PLASMA | > 32 Inch | 115 | 610 | 54 |
| PHILIPS | LCD | < 32 Inch | 356 | 299 | 157 |
| SAMSUNG | LCD | < 32 Inch | 343 | 335 | 32 |
| | LED | < 32 Inch | 529 | 261 | 113 |
| | LED | > 32 Inch | 579 | 656 | 322 |
| | PLASMA | > 32 Inch | 370 | 687 | 35 |
| SONY | LCD | < 32 Inch | 225 | 466 | 247 |
| | LED | > 32 Inch | 374 | 515 | 573 |
| Other Brands | | | 1107 | 280 | |
| Total | | | 5000 | 396 | 905 |

### Report type C: Market segmentation by Product Item

The following handling rules need to be applied:

| Context | No. of handling rule | Entity or identifier handling | Attribute handling | | | Measure handling | | |
|---|---|---|---|---|---|---|---|---|
| | | | Basic attribute handling | Regular attribute handling | Higher-level identifier handling | Basic measure handling | Entity-related measure handling | Regular measure handling |
| Exclusive Product of Retailer 1 | 2 | Rename identifiers | keep | keep | rename | keep | keep | suppress |
| Exclusive Product of Retailer 2 | 3 | Rename identifiers | keep | rename | rename | keep | suppress | suppress |
| Exclusive Product of Retailer 3 | 3 | Rename identifiers | keep | rename | rename | keep | suppress | suppress |

All exclusive Products including all Products of exclusive Brands need to be renamed and the higher-level-identifier (Brand) and the regular measures (Selling Shops) need to be suppressed. For the exclusive Products of Retailer 2 and Retailer 3 even the regular attribute (Screen Size) and the entity-related measures (Price) need to be suppressed.

| Product Item | Brand | Technology | Screen Size | Sales Units | Price in EUR | Selling Shops |
|---|---|---|---|---|---|---|
| UE32F4000 | SAMSUNG | LED | 32 | 529 | 261 | 113 |
| PS51F5570 | SAMSUNG | PLASMA | 51 | 370 | 687 | 35 |
| UE40F6470 | SAMSUNG | LED | 40 | 360 | 699 | 288 |
| 26PFL4007K | PHILIPS | LCD | 26 | 356 | 299 | 157 |
| 32PFL3208K | BLAUPUNKT | LCD | 32 | 344 | 357 | 134 |
| UE32F5000 | SAMSUNG | LCD | 32 | 343 | 335 | 32 |
| 32LS345S | LG | PLASMA | 32 | 328 | 305 | 361 |
| suppressed | suppressed | LED | 32 | 301 | 306 | |
| KDL-40R470 | SONY | LED | 40 | 269 | 471 | 346 |
| suppressed | suppressed | LCD | | 261 | | |
| suppressed | suppressed | LCD | 32 | 244 | 328 | |
| KDL-32W655 | SONY | LCD | 32 | 225 | 466 | 247 |
| UE46F6170 | SAMSUNG | LED | 46 | 219 | 585 | 34 |
| Suppressed | suppressed | LED | 23 | 199 | 225 | |
| suppressed | suppressed | LED | | 119 | | |
| UE40F6500 | PANASONIC | PLASMA | 40 | 115 | 610 | 54 |
| suppressed | suppressed | LED | 28 | 111 | 244 | |
| KDL-42W655 | SONY | LED | 42 | 105 | 629 | 227 |
| suppressed | suppressed | LCD | 21 | 102 | 219 | |
| suppressed | suppressed | LCD | 29 | 100 | 199 | |
| Total | | | | 5000 | 396 | 905 |

But a segmentation by screen size would still show the exclusive products of Retailer 2 and Retailer 3 in the accurate screen size segment:

| Screen Size | Product Item | Brand | Technology | Screen Size | Sales Units | Price in EUR | Selling Shops |
|---|---|---|---|---|---|---|---|
| < 32 Inch | UE32F4000 | SAMSUNG | LED | 32 | 529 | 261 | 113 |
| | 26PFL4007K | PHILIPS | LCD | 26 | 356 | 299 | 157 |
| | 32PFL3208K | BLAUPUNKT | LCD | 32 | 344 | 357 | 134 |
| | UE32F5000 | SAMSUNG | LCD | 32 | 343 | 335 | 32 |
| | 32LS345S | LG | PLASMA | 32 | 328 | 305 | 361 |
| | suppressed | suppressed | LED | 32 | 301 | 306 | |
| | suppressed | suppressed | LCD | | 261 | | |
| | suppressed | suppressed | LCD | 32 | 244 | 328 | |
| | KDL-32W655 | SONY | LCD | 32 | 225 | 466 | 247 |
| | Suppressed | suppressed | LED | 23 | 199 | 225 | |
| | suppressed | suppressed | LED | 28 | 111 | 244 | |
| | suppressed | suppressed | LCD | 21 | 102 | 219 | |
| | suppressed | suppressed | LCD | 29 | 100 | 199 | |
| > 32 Inch | PS51F5570 | SAMSUNG | PLASMA | 51 | 370 | 687 | 35 |
| | UE40F6470 | SAMSUNG | LED | 40 | 360 | 699 | 288 |
| | KDL-40R470 | SONY | LED | 40 | 269 | 471 | 346 |
| | UE46F6170 | SAMSUNG | LED | 46 | 219 | 585 | 34 |
| | suppressed | suppressed | LED | | 119 | | |
| | UE40F6500 | PANASONIC | PLASMA | 40 | 115 | 610 | 54 |
| | KDL-42W655 | SONY | LED | 42 | 105 | 629 | 227 |
| Total | | | | | 5000 | 396 | 905 |

### Report type D: Product Items inside market segmentations

Report types B and C were showing the handling rules for further description of the critical elements, assuming that all segmentations remain unchanged.

But the invention described allows to handle segmenting attributes or measures different from describing attributes or measures.

Using the same data as above but now choosing handling rules that change segmenting attributes or measures.

Out of the set of possible handling rules, according to the next table the following were selected:

| Context | N. | Entity or identifier handling | Attribute handling | | | | | | | Measure handling | | | | |
|---|---|---|---|---|---|---|---|---|---|---|---|---|---|---|
| | | | Basic attribute handling | | Regular attribute handling | | Higher-level identifier handling | | | Basic measure handling | Entity-related measure handling | | Regular measure handling | |
| | | | segmenting | describing | segmenting | describing | segmenting | describing | segmenting | describing | segmenting | describing | segmenting | describing |
| Exclusive Brand of Retailer 1 | 7 | aggregate | keep | aggregate | keep | aggregate | keep | aggregate | keep | keep | keep | keep | keep | suppress |
| Exclusive Brand of Retailer 2 | 7 | aggregate | keep | aggregate | keep | aggregate | keep | aggregate | keep | keep | keep | keep | keep | suppress |
| Exclusive Product of Retailer 1 | k | rename | keep | keep | aggregate | rename | keep | rename | keep | keep | keep | keep | keep | suppress |
| Exclusive Product of Retailer 2 | l | rename | keep | keep | aggregate | rename | keep | rename | keep | keep | keep | keep | suppress | suppress |
| Exclusive Product of Retailer 3 | l | rename | keep | keep | aggregate | rename | keep | rename | keep | keep | keep | keep | suppress | suppress |

The difference to the example in report type C is the suppression of regular attributes for exclusive products even when the regular attributes are used for segmentation:

| Screen Size | Product Item | Brand | Technology | Screen Size | Sales Units | Price in EUR | Selling Shops |
|---|---|---|---|---|---|---|---|
| < 32 Inch | UE32F4000 | SAMSUNG | LED | 32 | 529 | 261 | 113 |
| | 26PFL4007K | PHILIPS | LCD | 26 | 356 | 299 | 157 |
| | 32PFL3208K | BLAUPUNKT | LCD | 32 | 344 | 357 | 134 |
| | UE32F5000 | SAMSUNG | LCD | 32 | 343 | 335 | 32 |
| | 32LS345S | LG | PLASMA | 32 | 328 | 305 | 361 |
| | KDL-32W655 | SONY | LCD | 32 | 225 | 466 | 247 |
| > 32 Inch | PS51F5570 | SAMSUNG | PLASMA | 51 | 370 | 687 | 35 |
| | UE40F6470 | SAMSUNG | LED | 40 | 360 | 699 | 288 |
| | KDL-40R470 | SONY | LED | 40 | 269 | 471 | 346 |
| | UE46F6170 | SAMSUNG | LED | 46 | 219 | 585 | 34 |
| | UE40F6500 | PANASONIC | PLASMA | 40 | 115 | 610 | 54 |
| | KDL-42W655 | SONY | LED | 42 | 105 | 629 | 227 |
| suppressed | suppressed | suppressed | LED | | 301 | 306 | |
| | suppressed | suppressed | LCD | | 261 | | |
| | suppressed | suppressed | LCD | | 244 | 328 | |
| | Suppressed | suppressed | LED | | 199 | 225 | |
| | suppressed | suppressed | LED | | 119 | | |
| | suppressed | suppressed | LED | | 111 | 244 | |
| | suppressed | suppressed | LCD | | 102 | 219 | |
| | suppressed | suppressed | LCD | | 100 | 199 | |
| Total | | | | | 5000 | 396 | 905 |

Now the segmentation by a regular attribute (screen size) does not position the exclusive product items into the accurate group but creates an additional group (suppressed).

### Report type E: Client specific market segmentation by Product Item

This report type is based on type C where the following handling rules were applied:

| Context | No. of handling rule | Entity or identifier handling | Attribute handling | | | Measure handling | | |
|---|---|---|---|---|---|---|---|---|
| | | | Basic attribute handling | Regular attribute handling | Higher-level identifier handling | Basic measure handling | Entity-related measure handling | Regular measure handling |
| Exclusive Product of Retailer 1 | 2 | Rename identifiers | keep | Keep | Rename | keep | keep | suppress |
| Exclusive Product of Retailer 2 | 3 | Rename identifiers | keep | Rename | Rename | keep | suppress | suppress |
| Exclusive Product of Retailer 3 | 3 | Rename identifiers | keep | Rename | Rename | keep | suppress | suppress |

If the current user or the target client of the report is for example Retailer 1, then the handling rules for this client will be ignored, i.e. the retailer may see his own data without any restrictions:

| Product Item | Brand | Screen Size | Technology | Sales Units | Price in EUR | Selling Shops |
|---|---|---|---|---|---|---|
| UE32F4000 | SAMSUNG | 32 | LED | 529 | 261 | 113 |
| PS51F5570 | SAMSUNG | 51 | PLASMA | 370 | 687 | 35 |
| UE40F6470 | SAMSUNG | 40 | LED | 360 | 699 | 288 |
| 26PFL4007K | PHILIPS | 26 | LCD | 356 | 299 | 157 |
| 32PFL3208K | BLAUPUNKT | 32 | LCD | 344 | 357 | 134 |
| UE32F5000 | SAMSUNG | 32 | LCD | 343 | 335 | 32 |
| 32LS345S | LG | 32 | PLASMA | 328 | 305 | 361 |
| XLE 328 W-D4 | OKAY | 32 | LED | 301 | 306 | 18 |
| KDL-40R470 | SONY | 40 | LED | 269 | 471 | 346 |
| suppressed | suppressed | LCD | | 261 | | |
| XLE 328 B-D4S | OKAY | 32 | LCD | 244 | 328 | 18 |
| KDL-32W655 | SONY | 32 | LCD | 225 | 466 | 247 |
| UE46F6170 | SAMSUNG | 46 | LED | 219 | 585 | 34 |
| OLE 244-B-D4 | OKAY | 23.6 | LED | 199 | 225 | 18 |
| suppressed | suppressed | LED | | 119 | | |
| UE40F6500 | PANASONIC | 40 | PLASMA | 115 | 610 | 54 |
| LED29B1000S | PANASONIC | 28.5 | LED | 111 | 244 | 18 |
| KDL-42W655 | SONY | 42 | LED | 105 | 629 | 227 |
| XLE 228-B D4 DVD | OKAY | 21.5 | LCD | 102 | 219 | 18 |
| LED29A6500 | PANASONIC | 29 | LCD | 100 | 199 | 18 |
| Total | | | | 5000 | 396 | 905 |

In a report for Retailer 1 only the exclusive brands and product items of Retailer 2 and Retailer 3 remain suppressed.

### List of reference numerals:

- 1: System
- 2: Database (data cube)
- 3: Classification data + handling rules
- 4: Data-Input
- 5: Data Classification Module
- 6: Data Processing Module
- 7: Data Reporting Module
- 8: Reports

## Claims

1. A data reporting, management and privacy control system (1), comprising:
a database (2), the database (2) containing data stored in a data cube, the data cube comprising in a plurality of dimensions a plurality of cube cells, the dimensions comprising an ordered set of attributes and the cube cells comprising facts, and containing stored privacy parameters related at least to a subset of the stored data;
a data classification module (5) for classifying the attributes and/or measures calculated from the facts of the data cube into a plurality of sensitivity classes and for adding handling rules as meta-data in a database (3) of classification data and handling rules;
a data processing module (6) for analyzing the stored handling rules and the data stored in the data cube and for adding the privacy parameters as meta-data in the at least one database (2); and
a data reporting module (7) for compiling and/or building data reports (8) on request from a subset of data stored in the data cube, for analyzing the classification data and measures with support from the added privacy parameters and for identifying and/or calculating handling rules related to the classification data and measures, the requested report (8) being compiled and/or built according to the handling rules stored in the database (3) of classification data and handling rules;

2. The system (1) of claim 1, wherein the data classification module (5) further comprises a knowledge-based database, wherein the attributes and/or measures are related to the sensitivity classes.

3. The system (1) of claim 2, wherein the data classification module (5) further comprises means for modifying the knowledge-based database according to a change of related external facts.

4. The system (1) according to one of the preceding claims, wherein the privacy parameters comprise a set of handling rules, each handling rule comprises a subset of privacy rules specifically related to a sensitivity class.

5. The system (1) of claim 4, wherein identification flags are stored as privacy parameters, each identification flag identifies one specific handling rule out of the set of handling rules.

6. The system (1) of claim 4 or 5, wherein the privacy rules comprise at least one of keeping the attributes, renaming the attributes, aggregating the attributes, keeping the measures and suppressing the measures of the related sensitivity class.

7. The system (1) according to one of the preceding claims, wherein the privacy parameters comprise different handling rules for attributes and measures.

8. The system (1) according to one of the preceding claims, wherein the attributes of the data cube dimensions comprise at least one of identifying attributes and classifying attributes.

9. The system (1) according to one of the preceding claims, wherein the attributes of the data cube dimensions are classified by means of the data classification module (5) into at least one sensitivity class of an entity class, an identifier class, a higher-level identifier class, a basic attribute class and a regular attribute class.

10. The system (1) according to one of the preceding claims, wherein the measures by means of the data classification module (6) are classified into at least one sensitivity class of an entity-related measure class, a basic measure class and a regular measure class.

11. The system (1) according to one of the preceding claims, wherein the attributes of the data cube dimensions and the measures calculated from the facts of the data cube are treated differently depending on their usage in report calculation as segmenting attributes or measures and as describing attributes or measures.

12. The system (1) according to any of the preceding claims, wherein the data reporting module (7) further comprises means for analyzing client related privacy parameters and for identifying and/or calculating client related handling rules.

13. The system (1) of claim 12, wherein the data reporting module (7) further comprises means for identifying the current user of the system (1) or the target client of the reports (8) and for compiling and/or building data reports (8) from a subset of data stored in the data cube according to the client related handling rules in case the current user or target client is identified as a privileged user or client.
